Europäisches Patentamt

(19) European Patent Office

Office européen des brevets

(11) Veröffentlichungsnummer: **0 167 043**
**A1**

(12) # EUROPÄISCHE PATENTANMELDUNG

(21) Anmeldenummer: **85107380.9**

(22) Anmeldetag: **14.06.85**

(51) Int. Cl.⁴: **F 03 C 1/24**
**F 03 C 1/04, F 16 H 39/40**
**B 60 K 17/10, B 60 K 17/14**

(30) Priorität: **18.06.84 US 621985**

(43) Veröffentlichungstag der Anmeldung:
**08.01.86 Patentblatt 86/2**

(84) Benannte Vertragsstaaten:
**AT DE FR GB IT SE**

(71) Anmelder: **DEERE & COMPANY**
**1 John Deere Road**
**Moline Illinois 61265(US)**

(72) Erfinder: **Kress, James Henry**
**303 Colorado Road**
**Cedar Falls Iowa 50613(US)**

(74) Vertreter: **Feldmann, Bernhard et al,**
**DEERE & COMPANY European Office, Patent**
**Department Steubenstrasse 36-42 Postfach 503**
**D-6800 Mannheim 1(DE)**

(54) **Hydrostatischer Radantrieb.**

(57) Hydrostatischer Radantrieb mit einem in einem Gehäuse (22) angeordneten, ein Kolbengehäuse (60, 61) und einen Ringnocken (56, 57) aufweisenden Radialkolbenmotor (52, 54), einer ein Rad antreibenden Welle (34, 36) und mit einem zwei Stirnseiten (48, 50) aufweisenden Verteiler (46), der die Welle (34, 36) umgibt, wobei der Ringnocken (56, 57) und der Verteiler (46) in dem Gehäuse (22) drehfest angeordnet sind, das Kolbengehäuse (60, 61) mit der Welle (34, 36) drehfest verbunden ist, der Radialkolbenmotor (52, 54) gegen eine Stirnseite (48, 50) des Verteilers (46) anliegt, der Radialkolbenmotor (52, 54) und der Verteiler (46) gegeneinander gedrückt werden, und gegen die andere Stirnseite (50, 48) des Verteilers (46) das Kolbengehäuse (61, 60) eines zweiten Radialkolbenmotors (54, 52) anliegt, dessen Kolbengehäuse (61, 60) mit einer zweiten ein weiteres Rad (16, 14) antreibenden Welle (36, 34) drehfest verbunden ist und dessen Ringnocken (57, 58) in dem Gehäuse (22) drehfest angeordnet ist, wobei ferner an den dem Verteiler (46) abgelegenen Stirnseiten der Radialkolbenmotore (52, 54) mit der einen Welle (34, bzw. 36) verbundene Mittel (76, 86) angreifen, über die die Kolbengehäuse (60, 61) gegen den Verteiler (46) gedrückt werden.

EP 0 167 043 A1

./...

Fig. 3

Hydrostatischer Radantrieb

Die Erfindung bezieht sich auf einen hydrostatischen Radantrieb mit einem in einem Gehäuse angeordneten, ein Kolbengehäuse und einen Ringnocken aufweisenden Radialkolbenmotor, einer ein Rad antreibenden Welle und mit einem zwei Stirnseiten aufweisenden Verteiler, der die Welle umgibt, wobei der Ringnocken und der Verteiler in dem Gehäuse drehfest angeordnet sind, das Kolbengehäuse mit der Welle drehfest verbunden ist, der Radialkolbenmotor gegen eine Stirnseite des Verteilers anliegt und der Radialkolbenmotor und der Verteiler gegeneinander gedrückt werden.

Bei derartigen Radantrieben (US-A-3 511 131) ist jedem anzutreibenden Rad ein kompletter Antrieb mit Anschlüssen, Leitungen etc. zugeordnet, der sich in der Radnabe befindet, was im Prinzip problemlos ist, sofern es sich um bei Bedarf zuschaltbare Hilfsantriebe handelt.

Die mit der Erfindung zu lösende Aufgabe wird in der Verwendung dieser bekannten Radialkolbenmotore als Hauptantrieb gesehen.

Diese Aufgabe ist nach der Erfindung dadurch gelöst worden, daß gegen die andere Stirnseite des Verteilers das Kolbengehäuse eines zweiten Radialkolbemotors anliegt, dessen Kolbengehäuse mit einer zweiten ein weiteres Rad antreibenden Welle drehfest verbunden ist und dessen Ringnocken in dem Gehäuse drehfest angeordnet ist, wobei an den dem Verteiler abgelegenen Stirnseiten der Radialkolbenmotore mit der einen Welle verbundene Mittel angreifen, über die die Kolbengehäuse gegen den Verteiler gedrückt werden. Auf diese Weise werden zwei Radialkolbenmotore zu einem Hauptantrieb zusammengeschlossen, der in einfacher Weise in einer Querachse eingebaut und gegebenenfalls zusammen mit einem Endantrieb in langsam laufenden Arbeitsfahrzeugen Verwendung finden kann.

Bei diesen bekannten Radantrieben laufen die Kolbengehäuse mit den zugehörigen Wellen um, während der Verteiler bzw. die den Zu- und Abfluß zu den Kolben steuernde Verteilerplatte still steht, so daß sich neben der dadurch entstehenden Reibung hohe Drücke insbesondere dann einstellen, wenn ein Zulauf zu dem Kolbengehäuse durch dessen Stirnwand gesperrt ist. Diese Drücke tendieren dazu, den Verteiler von dem Kolbengehäuse fortzudrängen. Um dem entgegenzuwirken, wird nach der Erfindung weiter vorgeschlagen, daß die die Kolbengehäuse der Radialkolbenmotore gegen den Verteiler drückenden Mittel eine mit der einen Welle verbundene Federplatte, die gegen die Stirnseite eines Radialkolbenmotors anliegt, und axial ausgerichtete Ausgleichskolben aufweisen, die sich von jedem der die Kolben aufnehmenden Zylinder des anderen Radialkolbenmotors nach außen erstrecken und gegen eine Ringplatte zur Anlage bringbar sind, die mit der die Federplatte aufnehmenden Welle verbunden ist, wobei Ringplatte und Federplatte auf der zugehörigen Welle derart angeordnet sind, daß eine axiale Schiebebewegung mit Bezug auf den Verteiler nach außen unterbunden ist. Somit ist eine einfache in Axialrichtung wirkende Haltevorrichtung geschaffen, bei der die Reibung, die bei Relativdrehungen bei Kurvenfahrten auftritt, auf ein Minimum reduziert ist, da die Auflageflächen infolge der kreisförmig angeordneten Ausgleichszylinder sehr klein gehalten sind.

Um zu erreichen, daß bei extremen Einsatzverhältnissen kein Antriebsrad durchrutscht, ist erfindungsgemäß vorgesehen, daß für die beiden Wellen eine Kupplung vorgesehen ist, bei deren Beaufschlagung beide Wellen miteinander verbunden sind. Damit ist eine Differentialsperre geschaffen, die bei Bedarf ein- oder ausgeschaltet werden kann.

Damit in beiden Radialkolbenmotoren gleiche Druckverhältnisse bestehen, können nach der Erfindung die Ausgleichskolben des anderen Radialkolbenmotors über Auslässe mit
dem Zylinder des ersten Radialkolbenmotors verbunden sein.

Zweckmäßig sind die Ringplatte und die Kupplung in einem
mit dem Kolbengehäuse des einen Radialkolbenmotors verbundenen Ringflansch angeordnet, dessen radiale Stirnseite
mit der zweiten Welle verbunden ist.

In der Zeichnung ist ein nachfolgend näher erläutertes
Ausführungsbeispiel der Erfindung dargestellt. Es zeigt:

Fig. 1 einen schematisch angedeuteten Ackerschlepper
       mit einer hydrostatischen Achsenvorrichtung;

Fig. 2 einen Schnitt nach der Linie 2-2 in Fig. 4;

Fig. 3 die obere Hälfte von Fig. 2 in vergrößertem
       Maßstab mit Hydraulikleitungen, Pumpen und
       Ventilen und

Fig. 4 einen Radialkolbenmotor im Schnitt nach der
       Linie 4-4 in Fig. 2.

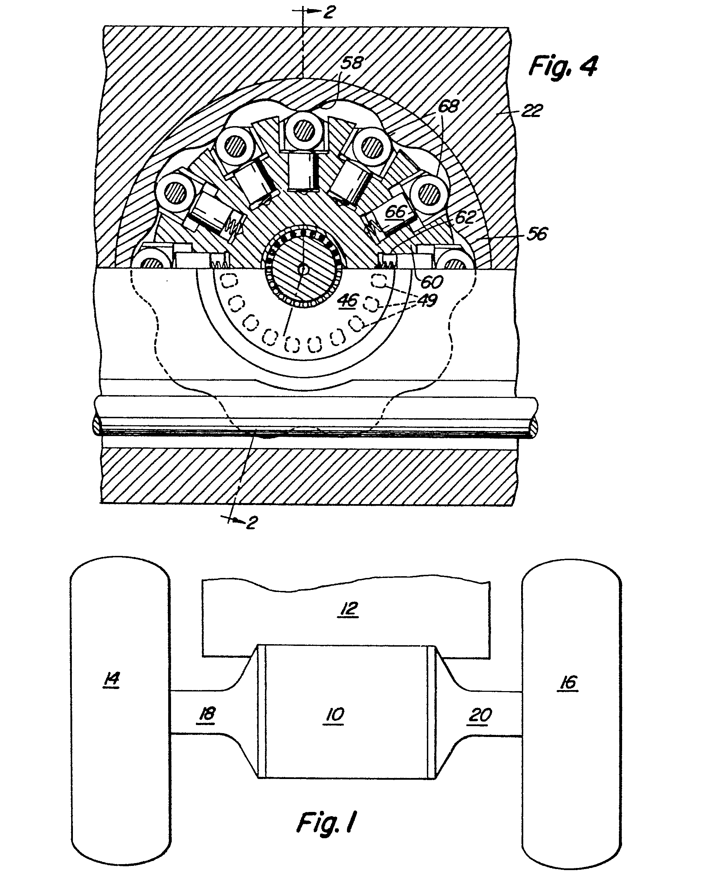

In Fig. 1 der Zeichnung ist eine hydrostatische Achsenvorrichtung mit 10 bezeichnet. Sie kann bei vielen Fahrzeugen,
insbesondere bei Ackerschleppern 12, Verwendung finden.
Die Achsenvorrichtung 10 dient zum Antreiben von Rädern,
beim Ausführungsbeispiel von rückwärtigen Rädern 14 und
16, die über Achsen in linken und rechten Achstrichtern 18
und 20 mit der Achsenvorrichtung 10 verbunden sind.

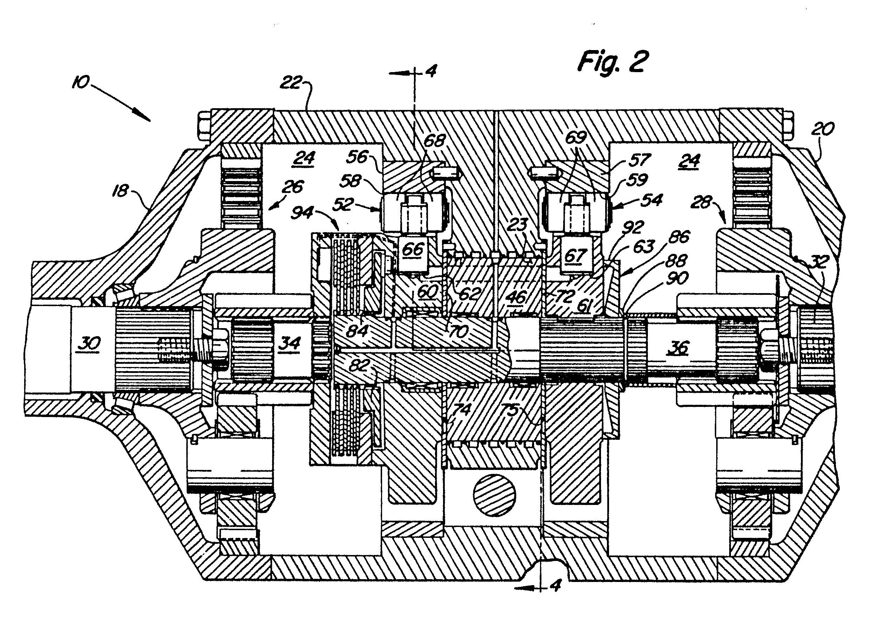

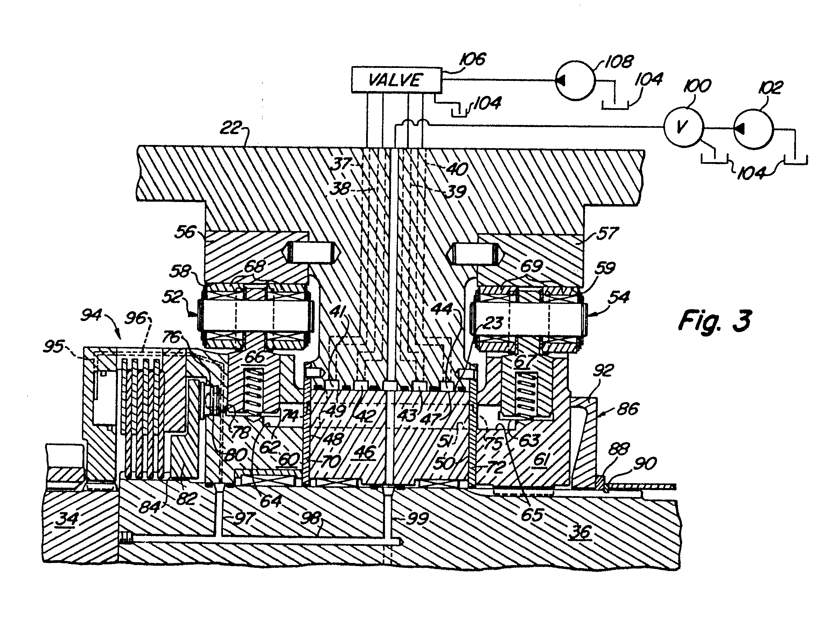

Aus den Fig. 2 und 3 ist zu entnehmen, daß die Achsenvorrichtung 10 von einem ringförmigen Gehäuse 22 umgeben
ist, das eine zylindrische Kammer 24 bildet, an das die

Achstrichter 18 und 20 anschraubbar sind und das zwei axial zueinander ausgerichtete Planetenantriebe 26 und 28 aufnimmt. Letztere treiben Ausgangswellen 30 und 32 an, die mit den Rädern 14 und 16 verbunden sind. Die Planetenantriebe 26 und 28 wiederum sind über zwei zueinander ausgerichtete Wellen 34 und 36 antreibbar. Diese Wellen können auch als Ausgangswellen dienen, sofern die Planetenantriebe beispielsweise wegen einer nicht erforderlichen Untersetzung entbehrlich sind. Das Gehäuse 22 ist mit vier Flüssigkeitskanälen 37, 38, 39 und 40 (Fig. 3) versehen, die in vier Ringräume 41, 42, 43 und 44 münden. Letztere wiederum sind in die innere Oberfläche 23 des Gehäuses 22 eingearbeitet.

Die zweite Welle 36 der beiden Wellen 34 und 36 ist von einem ringförmigen Verteiler 46 umgeben, dessen äußere Oberfläche 47 mit der Oberfläche 23 des Gehäuses 22 in Eingriff steht. In den Verteiler sind eine Vielzahl von Kanälen eingearbeitet, die sich von den Ringräumen 41, 42, 43 und 44 bis zu einer rechten und einer linken Stirnseite 48 und 50 des Verteilers 46 erstrecken, wobei sich die Ausdrücke rechts und links auf die rechte und linke Seite einer entsprechenden Zeichnungsfigur beziehen. Der Verteiler 46 weist 20 Auslässe auf (10 und in der unteren Hälfte von Fig. 4 eingezeichnet), die umfangmäßig gleichmäßig auf der linken und rechten Stirnseite 48 und 50 verteilt und auf der linken Stirnseite mit 49 und auf der rechten Stirnseite mit 51 bezeichnet sind.

Beiderseits des Verteilers 46 ist je ein Radialkolbenmotor 52 und 54 mit großen Momenten und kleiner Drehzahl vorgesehen, dessen nicht umlaufende Teile mit dem Gehäuse 22 und dessen umlaufende Teile mit der Welle 34 bzw. der Welle 36 drehfest verbunden sind. Die nicht umlaufenden Teile der Radialkolbenmotore 52 und 54 sind Ringnocken 56 und 57, die jeweils mit dem Gehäuse 22 verbunden sind. Die Ringnocken 56 und 57 haben Nockenoberflächen mit Nockenbukkeln 58 und 59, die, wie aus Fig. 4 zu ersehen ist, auf dem Umfang gleichmäßig verteilt sind, und jedem Nockenbuckel sind jeweils zwei Auslässe zugeordnet. Die Radialkolbenmotore 52 und 54 sind ferner mit umlaufenden Kolbengehäusen 60 und 61 ausgerüstet, in die eine Vielzahl sich radial erstreckender Zylinder 62 und 63 eingearbeitet sind. Aus Fig. 4 geht hervor, daß das Kolbengehäuse 60 12 Zylinder 62 aufweist. Dieselbe Anzahl Zylinder 63 ist auch im Kolbengehäuse 61 vorgesehen. Den Zylindern 62 und 63 sind Auslässe 64 und 65 zugeordnet, die bei einem Umlauf der Kolbengehäuse 60, 61 nacheinander mit den Auslässen 49 und 51 zur Deckung kommen. In jedem Zylinder 62 ist ein Kolben 66 und in jeden Zylinder 63 ist ein Kolben 67 eingesetzt. Die Kolben 66, 67 sind in ihren Zylindern auf und ab beweglich, in Abhängigkeit von der Beaufschlagung mit Druckflüssigkeit bzw. von ihrem Anschluß an den Rücklauf. Stößelrollen 68 und 69 liegen an den Ringnocken 56, 57 an und bewirken das Umlaufen der Kolbengehäuse 60, 61 im Gehäuse 22 in Abhängigkeit von der Auf- und Abbewegung der Kolben. Eine detaillierte Beschreibung solcher Radialkolbenmotore ist zu finden in US-A-3 511 131 und US-A- 3 760 691, auf die Bezug genommen wird.

Zwischen den Stirnseiten 48 und 50 des Verteilers 46 und den entsprechenden Seiten der Kolbengehäuse 60 und 61 ist je eine Ventilplatte 70 und 72 vorgesehen, die ebenfalls mit dem Gehäuse 22 verbunden sind und damit ebenso wie Gehäuse und Verteiler nicht umlaufen, da auch der Verteiler 46 drehfest mit dem Gehäuse 22 verbunden ist. In die Ventilplatten 70 und 72 sind Ausgänge 74 und 75 eingearbeitet, die in ihrer Anzahl, Größe und Lage den Auslässen 49 und 51 in dem Verteiler 46 entsprechen. Die Ventilplatten nehmen den zwischen den umlaufenden Kolbengehäusen und dem stillstehenden Verteiler auftretenden Verschleiß auf, damit der relativ teure Verteiler bei Verschleiß nicht ersetzt werden muß. Der Radialkolbenmotor 52 unterscheidet sich von dem Radialkolbenmotor 54 insoweit, als er noch mit axial ausgerichteten Ausgleichskolben 76 versehen ist, die über Kanäle 78 mit den Zylindern 62 verbunden sind. Die Ausgleichskolben 76 sind in Aussparungen 80 axial verschiebbar, die in die äußere radiale Stirnfläche des Radialkolbenmotors 52 eingearbeitet sind. Bei Beaufschlagung bzw. bei Betrieb der Radialkolbenmotore übt die äußere Oberfläche eines jeden Ausgleichskolbens eine Kraft auf eine danebenliegende Ringplatte 82 aus, die drehfest mit der zweiten Welle 36 verbunden und gegen eine Axialverschiebung nach außen über eine an die Welle 36 angeformte Schulter 84 gesichert ist. Bei Beaufschlagung werden die Ausgleichskolben 76 sich nach außen verstellen und gegen die Ringplatte 82 zur Anlage kommen. Dabei wirken die Auslässe 49, 51 und die Ausgänge 74 und 75 und die dazwischenliegenden Kanäle zusammen, um zu gewährleisten, daß der Flüssigkeitsdruck in den radialen Zylindern 62 und 63 ausgeglichen ist.

Die Achsvorrichtung 10 ist ferner noch mit einer Federplatte 86 versehen, die auf der zweiten Welle 36 mittels einer Scheibe 88 und eines Sprengrings 90 gehalten wird. An den äußeren Umfang der Federplatte 86 ist ein Ringsteg 92 vorgesehen, der gegen die radiale Stirnseite des Radialkolbenmotors 54 anliegt und somit eine nach links gerichtete Kraft auf den Verteiler 46 ausübt. Die Federplatte 86 wirkt aufgrund ihrer Ausbildung wie eine Feder und bewirkt eine Mindestkraft, um die Ventilplatten 70 und 72 stets in einem engen Kontakt mit dem Verteiler 46 und den Kolbengehäusen 60 und 61 zu halten.

Die Achsenvorrichtung 10 ist ferner noch mit einer als Differentialsperre wirkenden Kupplung 94 versehen, über die die beiden Wellen 34 und 36 miteinander verbindbar sind. Die Kupplung 94 ist in einem mit dem linken Kolbengehäuse 60 verbundenen Ringflansch angeordnet und als Lamellenkupplung ausgebildet, deren Lamellen wechselseitig mit dem Ringflansch und der Welle 36 verbunden ist. Der Ringflansch ist mit der Welle 34 verkeilt und stellt die Verbindung von dem auf der Welle 36 drehbar gelagerten linken Radialkolbenmotor 52 mit der Welle 34 dar. Die Kupplung ist über Kanäle 95, 96, 97, 98 und 99 an ein Ventil 100 angeschlossen, das seinerseits Druckflüssigkeit von einer Pumpe 102 erhalten kann, die an einen Sammelbehälter 104 ebenso wie das Ventil 100 angeschlossen ist. In einer Stellung des Ventils 100 kann die Kupplung 94 mit Druckflüssigkeit beaufschlagt werden, in der dann die beiden Wellen 34 und 36 miteinander verbunden sind und mit gleicher Drehzahl rotieren. In einer anderen Stellung des Ventils 100 ist die Kuppplung 94 an den Sammelbehälter 104 angeschlossen, so daß die Kupplung 94 ausgerückt und die Wellen 34 und 36 mit unterschiedlichen Drehzahlen umlaufen können, was beispielweise bei Kurvenfahrten erforderlich ist.

Die in dem Gehäuse 22 vorgesehenen Flüssigkeitskanäle 37, 38, 39 und 40 sind an ein Steuerventil 106 angeschlossen, das je nach seiner Stellung eine Verbindung mit einer weiteren Pumpe 108 und mit dem Sammelbehälter 104 herstellen kann, aus dem die Pumpe 108 Druckflüssigkeit ansaugen kann. Druckflüssigkeit bzw. Rücklauföl wird auf die vier Flüssigkeitskanäle 37, 38, 39 und 40 über das Steuerventil 106 verteilt, wie es in der US-A-3 511 131 offenbart ist.

Bei Geradeausfahrt des Ackerschleppers 12, bei der beide Radialkolbenmotore 52 und 54 mit gleicher Drehzahl umlaufen, wird keine Relativbewegung zwischen der Ringplatte 82 und dem Kreis von Ausgleichskolben 76 auftreten. Bei Kurvenfahrten wird aber eine Relativbewegung auftreten in Abhängigkeit von dem Kurvenradius. Daraus kann ein geringer Kraftverlust in Abhängigkeit von der Reibung und der Relativdrehung auftreten.

Patentansprüche
_____


1. Hydrostatischer Radantrieb mit einem in einem Gehäuse (22) angeordneten, ein Kolbengehäuse (60, 61) und einen Ringnocken (56, 57) aufweisenden Radialkolbenmotor (52, 54), einer ein Rad (14, 16) antreibenden Welle (34, 36) und mit einem zwei Stirnseiten (48, 50) aufweisenden Verteiler (46), der die Welle (34, 36) umgibt, wobei der Ringnocken (56, 57) und der Verteiler (46) in dem Gehäuse (22) drehfest angeordnet sind, das Kolbengehäuse (60, 61) mit der Welle (34, 36) drehfest verbunden ist, der Radialkolbenmotor (52, 54) gegen eine Stirnseite (48, 50) des Verteilers (46) anliegt und der Radialkolbenmotor (52, 54) und der Verteiler (46) gegeneinander gedrückt werden, dadurch gekennzeichnet, daß gegen die andere Stirnseite (50, 48) des Verteilers (46) das Kolbengehäuse (61, 60) eines zweiten Radialkolbenmotors (54, 52) anliegt, dessen Kolbengehäuse (61, 60) mit einer zweiten ein weiteres Rad (16, 14) antreibenden Welle (36, 34) drehfest verbunden ist und dessen Ringnocken (57, 58) in dem Gehäuse (22) drehfest angeordnet ist, wobei an den dem Verteiler (46) abgelegenen Stirnseiten der Radialkolbenmotore (52, 54) mit der einen Welle (34 bzw. 36) verbundene Mittel (76, 86) angreifen, über die die Kolbengehäuse (60, 61) gegen den Verteiler (46) gedrückt werden.

2. Hydrostatischer Radantrieb nach Anspruch 1, dadurch gekennzeichnet, daß die die Kolbengehäuse (60, 61) der Radialkolbenmotore (52, 54) gegen den Verteiler (46) drückenden Mittel eine mit der einen Welle (36) verbundene Federplatte (86), die gegen die Stirnseite eines Radialkolbenmotors (54) anliegt, und axial ausausgerichtete Ausgleichskolben (76) aufweisen, die sich von jedem der die Kolben (66) aufnehmenden Zylinder (62) des anderen Radialkolbenmotors (52) nach außen erstrecken und gegen eine Ringplatte (82) zur Anlage bringbar sind, die mit der die Federplatte (86) aufnehmenden Welle (36) verbunden ist, wobei Ringplatte (82) und Federplatte (86) auf der zugehörigen Welle (36) derart angeordnet sind, daß eine axiale Schiebebewegung mit Bezug auf den Verteiler (46) nach außen unterbunden ist.

3. Hydrostatischer Radantrieb nach Anspruch 1 oder 2, dadurch gekennzeichnet, daß für die beiden Wellen (34, 36) eine Kupplung (94) vorgesehen ist, bei deren Beaufschlagung beide Wellen (34, 36) miteinander verbunden sind.

4. Hydrostatischer Radantrieb nach einem oder mehreren der vorherigen Ansprüche, dadurch gekennzeichnet, daß die Ausgleichskolben (76) des anderen Radialkolbenmotors (52) über Auslässe (64, 49, 51, 65) mit dem Zylinder (63) des ersten Radialkolbenmotors (54) verbunden sind.

5. Hydrostatischer Radantrieb nach einem oder mehreren der vorherigen Ansprüche, dadurch gekennzeichnet, daß die Ringplatte (82) und die Kupplung (94) in einem mit dem Kolbengehäuse (60, 61) des einen Radialkolbenmotors (52) verbundenen Ringflansch angeordnet sind, dessen radiale Stirnseite mit der zweiten Welle (34) verbunden ist.

Fig. 4

58
68
22
66
62
56
60
46
49

2

2

Fig. 1

12
14
16
18
10
20

Fig. 2

3/3

Fig. 3

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | GB-A- 793 363 (FORD) <br> * Insgesamt * | 1 | F 03 C 1/24 <br> F 03 C 1/04 <br> F 16 H 39/40 <br> B 60 K 17/10 <br> B 60 K 17/14 |
| A | US-A-3 977 302 (EICKMANN) <br> * Spalte 3, Zeile 40 - Spalte 4, Zeile 9 * | 1 | |
| D,A | US-A-3 760 691 (KLECKNER) <br> * Insgesamt * | 1 | |
| D,A | US-A-3 511 131 (KRESS) <br> * Insgesamt * | 1 | |

---

-----

### RECHERCHIERTE SACHGEBIETE (Int. Cl.4)

F 03 C
F 04 B
F 01 B
F 16 H
B 60 K

Der vorliegende Recherchenbericht wurde für alle Patentansprüche erstellt.

| Recherchenort <br> DEN HAAG | Abschlußdatum der Recherche <br> 26-09-1985 | Prüfer <br> VON ARX H.P. |
|---|---|---|